# EUROPEAN PATENT APPLICATION

(11) **EP 3 661 318 A1**
(43) Date of publication of application: **03.06.2020**
(21) Application number: 18839363.1
(22) Date of filing: 27.07.2018
(51) Int. Cl.: H04W 76/30

(54) **INFORMATION TRANSMISSION METHOD AND APPARATUS**

(30) Priority: 28.07.2017 CN 201710628092
(71) Applicant: ZTE Corporation, Shenzhen, Guangdong 518057 (CN)
(72) Inventor: GU, Xiaoyun, Shenzhen Guangdong 518057 (CN); TAO, Wangsheng, Shenzhen Guangdong 518057 (CN)
(74) Representative: Aipex B.V.
(86) International application number: PCT/CN2018/097548
(87) International publication number: WO 2019/020115

(57) **Abstract**

The present application introduces a user plane function (UPF) anchor management method and apparatus. The method includes: detecting data transmission information of a user terminal on a first UPF anchor; and when there is failure in detecting the data transmission information of the user terminal on the first UPF anchor within set time, stopping using the first UPF anchor.

## Description

This application is based on and claims priority to Chinese patent application No. 201710628092.1 filed on July 28, 2017, the disclosure of which is incorporated herein by reference in its entirety.

### TECHNICAL FIELD

The present application relates to the field of mobile communication technologies, in particular, to a user plane function (UPF) anchor management method and apparatus.

### BACKGROUND

According to 3GPP 23.501 protocol, IPv6 multi-home is an implementation solution defined in a 5G system to ensure continuity of user sessions and services. Its implementation principle is that when a session management function (SMF) detects that user equipment (UE) moves or starts a new user service, for an established session, a new user plane function (UPF) anchor is reselected for the UE and a new internet protocol version 6 (IPv6) address is assigned to this new UPF anchor, while a branching UPF is introduced as distribution of uplink data messages and aggregation of downlink data messages.

After the new UPF anchor is established, an original user service message still flows through an old UPF anchor. Therefore, on the basis of ensuring continuity of user service messages, when to release the old UPF anchor is also a key point of the 5G core network system. In the current protocol, only release of the old UPF anchor by the SMF is explained, but it is unreasonable to release the old UPF anchor controlled by the SMF, because the SMF cannot know exactly when the user service message stops flowing through the old UPF anchor. Therefore, if the old UPF anchor is released too late, system resources will be wasted; if the old UPF anchor is released too early, the continuity of user services will be affected.

### SUMMARY

An overview of the present disclosure is described in detail as follows. This overview is not intended to limit the protection scope of claims.

The present application provides a user plane function (UPF) anchor management method and apparatus, which can avoid service interruption phenomenon caused by releasing an old UPF anchor in an IPv6 multi-home scene of a 5G network.

The present application provides an UPF anchor management method, the method is applied in an SMF of a core network and includes steps described below. Data transmission information of a user terminal on a first UPF anchor is detected; and when there is failure in detecting the data transmission information of the user terminal on the first UPF anchor within set time, the first UPF anchor is stopped from using.

In an embodiment, the step in which the data transmission information of the user terminal on the first UPF anchor is detected includes a step described below. A query message containing the set time is transmitted to the first UPF anchor, to enable the first UPF anchor to detect whether the user terminal has data transmission on a first internet protocol (IP) address bound with the first UPF anchor within the set time.

In an embodiment, the step in which when there is failure in detecting the data transmission information of the user terminal on the first UPF anchor within the set time, the first UPF anchor is stopped from using includes steps described below. Query result information fed back by the first UPF anchor is received; and when the query result information indicates that the user terminal has no data transmission on the first IP address within the set time, the first UPF anchor is stopped from using and data transmission is performed on a second IP address bound with a second UPF anchor.

In an embodiment, the step in which the data transmission information of the user terminal on the first UPF anchor is detected includes a step described below. A query message containing the set time is transmitted to a policy control function (PCF) to enable the PCF to detect, through an application function (AF) server, whether the user terminal has data transmission on a first IP address bound with the first UPF anchor within the set time.

In an embodiment, the step in which when there is failure in detecting the data transmission information of the user terminal on the first UPF anchor within the set time, the first UPF anchor is stopped from using includes steps described below. Query result information fed back by the PCF is received; and when the query result information indicates that the user terminal has no data transmission on the first IP address within the set time, the first UPF anchor is stopped from using and data transmission is performed on a second IP address bound with a second UPF anchor.

Besides, the present invention further provides an UPF anchor management apparatus, the apparatus is applied in an SMF of a core network and includes a detection module and a switch module. The detection module is configured to detect data transmission information of a user terminal on a first UPF anchor; and the switch module is configured to in response to failure in detecting the data transmission information of a user terminal on the first UPF anchor within a set time, stop using the first UPF anchor.

In an embodiment, the detection module is configured to transmit a query message containing the set time to the first UPF anchor, to enable the first UPF anchor to detect whether the user terminal has data transmission on a first IP address bound with the first UPF anchor within the set time.

In an embodiment, the switch module is configured to receive query result information fed back by the first UPF anchor; and in response to the query result information indicates that the user terminal has no data transmission on the first IP address within the set time, the switch module is configured to stop using the first UPF anchor and perform data transmission on a second IP address bound with a second UPF anchor.

In an embodiment, the detection module is configured to transmit a query message containing the set time to a PCF to enable the PCF to detect, through an AF server, whether the user terminal has data transmission on a first IP address bound with the first UPF anchor within the set time.

In an embodiment, the switch module is configured to receive query result information fed back by the first UPF anchor; and in response to the query result information indicates that the user terminal has no data transmission on the first IP address within the set time, the switch module is configured to stop using the first UPF anchor and perform data transmission on a second IP address bound with a second UPF anchor.

The present application further provides a computer readable storage medium, the storage medium includes a stored program. The program, when executed, performs the UPF anchor management method according to any one of the above described.

The present application further provides a processor, the processor is configured to execute a program. The program, when executed, performs the UPF anchor management method according to any one of the above described.

Other aspects will become apparent upon reading and understanding the drawings and detailed description.

### BRIEF DESCRIPTION OF DRAWINGS

FIG. 1 is a flowchart of an UPF anchor management method according to a first embodiment of the present application;
FIG. 2 is a timing diagram of an UPF anchor management method according to a second embodiment of the present application;
FIG. 3 is a timing diagram of an UPF anchor management method according to a fourth embodiment of the present application;
FIG. 4 is a schematic structural diagram of an UPF anchor management apparatus according to a fifth embodiment of the present application.

### DETAILED DESCRIPTION

Hereinafter, the present application will be described in detail with reference to the drawings and embodiments.

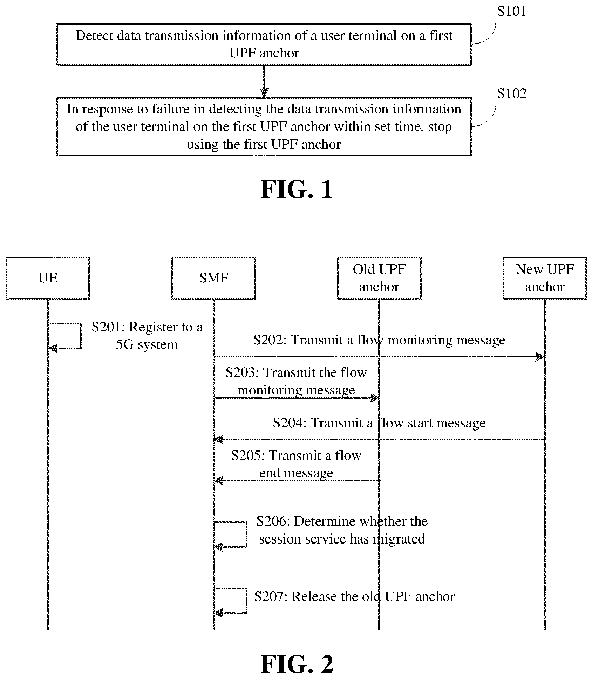

A first embodiment of the present application provides an UPF anchor management method. The method may be applied in an SMF of a core network. As shown in FIG. 1, the method includes step S101 and step S102.

In step S101, data transmission information of a user terminal on a first UPF anchor is detected.

For example, the user terminal is already connected to a 5G network and in an IPv6 multi-home scene.

In an embodiment, step S101 may include a step described below. A query message containing set time information is transmitted to the first UPF anchor, to enable the first UPF anchor to detect whether the user terminal has data transmission on a first IP address bound with the first UPF anchor within set time.

When the set time is over, the first UPF anchor will feed back query result information to the user terminal; the query result information includes result information indicating whether the user terminal has data transmission on the first IP address within the set time.

In step S102, when there is failure in detecting the data transmission information of the user terminal on the first UPF anchor within the set time, the first UPF anchor is stopped from using.

In an embodiment, step S102 may include steps described below. Query result information fed back by the first UPF anchor is received; and when the query result information indicates that the user terminal has no data transmission on the first IP address within the set time, the first UPF anchor is stopped from using and data transmission is performed on a second IP address bound with a second UPF anchor.

The second UPF anchor is started by the user terminal after the first UPF anchor is started.

In the present embodiment, through real-time detection of the data transmission information on the first UPF anchor, it is determined whether a session service has migrated from the first UPF anchor to the second UPF anchor. When there is no data transmission on the first UPF anchor, the first UPF anchor is timely released by the SMF.

A second embodiment of the present application provides an UPF anchor management method. As shown in FIG. 2, the method includes step S201 to step S207.

In step S201, UE is registered to a 5G system, and a session service of the UE has established the IPv6 multi-home.

In step S202, the SMF transmits a flow monitoring message to a new UPF anchor, so that when the new UPF anchor detects flow on a new IP address, the new UPF anchor transmits a flow start message to the SMF.

The new UPF anchor in the present embodiment is equivalent to the second UPF anchor in the first embodiment, the new IP address in the present embodiment is equivalent to the second IP address in the first embodiment. The new IP address is the address assigned to the new UPF anchor.

In step S203, the SMF transmits a flow monitoring message carrying set time information to an old UPF anchor, so that when the old UPF anchor detects that there is no flow on the old IP address within the set time, the old UPF anchor transmits a flow end message to the SMF.

The old UPF anchor in the present embodiment is equivalent to the first UPF anchor in the first embodiment, the old IP address in the present embodiment is equivalent to the first IP address in the first embodiment. The old IP address is the address assigned to the old UPF anchor.

In step S204, the new UPF anchor transmits the flow start message to the SMF, which indicates that flow on the new IP address has started.

In step S205, the old UPF anchor transmits the flow end message to the SMF, which indicates that flow on the old IP address has terminated.

In step S206, the SMF determines whether the session service of the UE has migrated from the old IP address to the new IP address according to the received flow start message and flow end message, thereby it is determined whether the old IP address and the old UPF anchor may be released.

When the SMF receives the flow start message and the flow end message, which indicates that the session service of the UE has already migrated from the old IP address to the new IP address, the SMF performs a release operation of the old IP address and the old UPF anchor.

In step S207, the SMF releases the old IP address and the old UPF anchor according to the flow specified in 23.502 protocol.

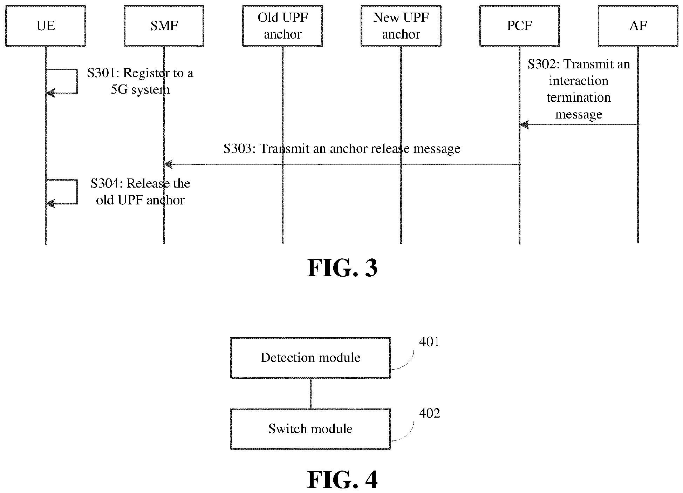

A third embodiment of the present application provides an UPF anchor management method. The method may be applied in an SMF of a core network. As shown in FIG. 3, the method includes step 1 and step 2.

In step 1, data transmission information of a user terminal on a first UPF anchor is detected.

For example, the user terminal is already connected to a 5G network, which is in an IPv6 multi-home scene.

In an embodiment, the step 1 may include a step described below. A query message containing set time is sent to a PCF to enable the PCF through an AF server to detect whether the user terminal has data transmission on a first IP address bound with the first UPF anchor within the set time.

When the set time is over, the PCF feeds back query result information to the user terminal; the query result information includes result information indicating whether the user terminal has data transmission on the first IP address within the set time.

In step 2, when there is failure in detecting the data transmission information of the user terminal on the first UPF anchor within set time, the first UPF anchor is stopped from using.

In an embodiment, step 2 may include steps described below. Query result information fed back by the PCF is received; and when the query result information indicates that the user terminal has no data transmission on the first IP address within the set time, the first UPF anchor is stopped from using and data transmission is preformed on a second IP address bound with a second UPF anchor.

The second UPF anchor is started by the user terminal after the first UPF anchor is started.

In the present embodiment, through real-time detection of the data transmission information on the first UPF anchor, the SMF determines whether the session service has migrated from the first UPF anchor to the second UPF anchor. When there is no data transmission on the first UPF anchor, the first UPF anchor is timely released by the SMF.

A fourth embodiment of the present application provides an UPF anchor management method. As shown in FIG. 3, the method includes step S301 to step S304.

In step S301, UE is registered to a 5G system, and a session service of the UE has established the IPv6 multi-home.

In step S302, when an AF server detects that there is no interaction information of a session service message on an old IP address within set time, the AF server transmits an interaction termination message to a PCF.

The old IP address is the address assigned to an old UPF anchor.

The old IP address in this embodiment is equivalent to the first IP address in the first embodiment; the old UPF anchor in this embodiment is equivalent to the first UPF anchor in the first embodiment.

In step S303, when the PCF receives the interaction termination message, it transmits an anchor release message to the SMF.

When it is detected that there is no interaction information of the session service message on the old IP address, which indicates that the session service has migrated from the old IP address to the new IP address, thus it is determined to the old IP address and the old UPF anchor may be released.

In step S304, when the SMF receives the anchor release message, it releases the old IP address and the old UPF anchor according to the flow specified in the 23.502 protocol.

A fifth embodiment of the present application provides an UPF anchor management apparatus. The apparatus is applied in an SMF of a core network. As shown in FIG. 4, the apparatus includes a detection module 401 and a switch module 402.

The detection module 401 is configured to detect data transmission information of a user terminal on a first UPF anchor.

For example, the user terminal is already connected to a 5G network and in an IPv6 multi-home scene.

In an embodiment, the detection module 401 is configured to transmit a query message containing the set time to the first UPF anchor, to enable the first UPF anchor to detect whether the user terminal has data transmission on a first IP address bound with the first UPF anchor within the set time; or, the detection module 401 is configured to transmit a query message containing the set time to a PCF to enable the PCF to detect, through an AF server, whether the user terminal has data transmission on a first IP address bound with the first UPF anchor within the set time.

The switch module 402 is configured to stop using the first UPF anchor when there is failure in detecting the data transmission information of a user terminal on the first UPF anchor within a set time.

In an embodiment, the switch module 402 is configured to receive query result information fed back by the first UPF anchor, and when the query result information indicates that the user terminal has no data transmission on the first IP address within the set time, stop using the first UPF anchor and perform data transmission on a second IP address bound with a second UPF anchor; or, the switch module 402 is configured to receive query result information fed back by the first UPF anchor, and when the query result information indicates that the user terminal has no data transmission on the first IP address within the set time, stop using the first UPF anchor and perform data transmission on a second IP address bound with a second UPF anchor.

The second UPF anchor is started by the user terminal after the first UPF anchor is started.

The UPF anchor management method and apparatus introduced in the embodiments of the present application determine whether a session has ended on the old UPF anchor through the detection of flow information of the session on the old UPF anchor; when it is detected that the session is ended on the old UPF anchor, the SMF is notified, and the SMF performs release of the old UPF anchor. The present application provides a reliable and real-time manner to release an old UPF anchor in an IPv6 multi-home scene of a 5G network.

## Claims

1. A user plane function, UPF, anchor management method, applied in a session management function, SMF, of a core network, comprising:
detecting data transmission information of a user terminal on a first UPF anchor; and
in response to failure in detecting the data transmission information of the user terminal on the first UPF anchor within set time, stopping using the first UPF anchor.

2. The UPF anchor management method according to claim 1, wherein detecting the data transmission information of the user terminal on the first UPF anchor comprises:
transmitting a query message containing the set time to the first UPF anchor, to enable the first UPF anchor to detect whether the user terminal has data transmission on a first internet protocol, IP, address bound with the first UPF anchor within the set time.

3. The UPF anchor management method according to claim 2, wherein in response to failure in detecting the data transmission information of the user terminal on the first UPF anchor within the set time, stopping using the first UPF anchor comprises:
receiving query result information fed back by the first UPF anchor; and
in response to the query result information indicating that the user terminal has no data transmission on the first IP address within the set time, stopping using the first UPF anchor and performing data transmission on a second IP address bound with a second UPF anchor.

4. The UPF anchor management method according to claim 1, wherein detecting the data transmission information of the user terminal on the first UPF anchor comprises:
transmitting a query message containing the set time to a policy control function, PCF, to enable the PCF to detect, through an application function, AF, server, whether the user terminal has data transmission on a first IP address bound with the first UPF anchor within the set time.

5. The UPF anchor management method according to claim 4, wherein in response to failure in detecting the data transmission information of the user terminal on the first UPF anchor within the set time, stopping using the first UPF anchor comprises:
receiving query result information fed back by the PCF; and
in response to the query result information indicating that the user terminal has no data transmission on the first IP address within the set time, stopping using the first UPF anchor and performing data transmission on a second IP address bound with a second UPF anchor.

6. A user plane function, UPF, anchor management apparatus, applied in a session management function SMF, of a core network, wherein the apparatus comprises:
a detection module, which is configured to detect data transmission information of a user terminal on a first UPF anchor; and
a switch module, which is configured to in response to failure in detecting the data transmission information of a user terminal on the first UPF anchor within set time, stop using the first UPF anchor.

7. The UPF anchor management apparatus according to claim 6, wherein the detection module is configured to:
transmit a query message containing the set time to the first UPF anchor, to enable the first UPF anchor to detect whether the user terminal has data transmission on a first internet protocol, IP, address bound with the first UPF anchor within the set time.

8. The UPF anchor management apparatus according to claim 7, wherein the switch module is configured to:
receive query result information fed back by the first UPF anchor; and
in response to the query result information indicating that the user terminal has no data transmission on the first IP address within the set time, stop using the first UPF anchor and perform data transmission on a second IP address bound with a second UPF anchor.

9. The UPF anchor management apparatus according to claim 6, wherein the detection module is configured to:
transmit a query message containing the set time to a policy control function, PCF, to enable the PCF to detect, through an application function, AF, server, whether the user terminal has data transmission on a first IP address bound with the first UPF anchor within the set time.

10. The UPF anchor management apparatus according to claim 9, wherein the switch module is configured to:
receive query result information fed back by the PCF; and
in response to the query result information indicating that the user terminal has no data transmission on the first IP address within the set time, stop using the first UPF anchor and perform data transmission on a second IP address bound with a second UPF anchor.

11. A computer readable storage medium, comprising a stored program, wherein the program, when executed, performs the method according to any one of claims 1 to 5.

12. A processor, configured to execute a program, wherein the program, when executed, performs the method according to any one of claims 1 to 5.
